# FASCICULE DE BREVET EUROPEEN

(11) **EP 2 558 847 B1**
(45) Date de publication et mention de la délivrance du brevet: **01.08.2018**
(21) Numéro de dépôt: 11730368.5
(22) Date de dépôt: 12.04.2011
(51) Int. Cl.: G01N 21/958

(54) **PROCÉDÉ DE DÉTECTION DE DÉFAUTS DANS DES ARTICLES VERRIERS ET INSTALLATION POUR LA MISE EN OEUVRE DUDIT PROCÉDÉ**
VERFAHREN ZUR DETEKTION VON DEFEKTEN IN GLASWARENARTIKELN UND INSTALLATION ZUR IMPLEMENTIERUNG DES BESAGTEN VERFAHRENS
METHOD FOR DETECTING DEFECTS IN GLASSWARE ARTICLES AND INSTALLATION FOR IMPLEMENTING SAID METHOD

(30) Priorité: 13.04.2010 FR 1052824
(43) Date de publication de la demande: 20.02.2013
(73) Titulaire: Iris - Inspection Machines, 69200 Venissieux (FR)
(72) Inventeur: RAHMANI, Majd, 69100 Villeurbanne (FR); DELOLY, Christophe, 69390 Charly (FR); VOLAY, Philippe, 69290 Saint Genis les Ollières (FR)
(74) Mandataire: Cabinet Laurent & Charras
(86) Numéro de dépôt international: PCT/FR2011/050837
(87) Numéro de publication internationale: WO 2011/128580

(56) Documents cités:
- EP-B1- 1 931 973
- US-B1- 6 212 962

## Description

### DOMAINE TECHNIQUE

L'invention se rattache au domaine des installations de contrôle de qualité de fabrication des articles verriers, tels que les bouteilles, flacons et autres récipients. Elle vise plus particulièrement un procédé spécifiquement dédié à la détection d'un certain type de défauts dits « *transparents* » par opposition aux défauts dits « *opaques* » qui sont facilement détectables.

Par défauts « *transparents* », on entend notamment, mais pas uniquement, les défauts formés par des bulles présentes en surface de l'article et qui possèdent une très faible épaisseur, de sorte que leur rétroéclairage produit des zones de très faible contraste, et donc difficilement détectables. De tels défauts sont particulièrement délicats pour l'emploi d'articles dans des industries telles que la parfumerie où les exigences sont très élevées en termes de régularité esthétique. L'industrie pharmaceutique est également extrêmement sensible, dans la mesure où ce type de défauts peut conduire à la formation d'éclats de verre qui sont encore plus dangereux lorsqu'ils se trouvent à l'intérieur du flacon.

D'autres défauts dits « *transparents* », tels que les plis creux ou non creux, sont également difficiles à détecter, bien qu'ils soient plus facilement apparents lorsque l'article est plein.

### TECHNIQUES ANTERIEURES

De façon générale, les défauts transparents sont assez difficiles à détecter, et de nombreuses solutions ont déjà été proposées.

Ainsi, une première technique consiste à rétroéclairer un article non pas avec une source de lumière homogène, mais au contraire avec une « mire » formée de différentes bandes lumineuses parallèles. On génère ainsi une lumière structurée, qui agit sur l'article comme une pluralité de sources séparées, ce qui augmente légèrement le contraste des défauts ainsi rétroéclairés. Ce type de méthode n'est toutefois pas réellement satisfaisant, dans la mesure où les zones situées en face des parties occultées de la mire ne sont pas réellement inspectées. En outre, les petits défauts ne sont pas facilement détectables, car ils doivent être d'une taille supérieure au pas de la mire pour que leur contraste augmente dans l'image obtenue. Par ailleurs, les images ainsi obtenues sont difficilement analysables pour les articles qui présentent des déformations dues à une répartition d'épaisseur qui n'est pas homogène. En d'autres termes, cette méthode est plus particulièrement destinée aux objets plats, ou plus généralement à ceux qui présentent une épaisseur constante.

Pour réaliser les mires à bandes de ce type, différentes solutions techniques ont été proposées consistant à utiliser des masques semi-transparents, interposés devant une source lumineuse, ou bien encore des sources réalisées à partir de rangées de diodes électroluminescentes qui peuvent être éclairées en créant des séries de bandes lumineuses. Cette dernière solution, si elle permet de s'adapter à différents types d'articles en reprogrammant la géométrie des bandes éclairées, elle n'est toutefois pas complètement satisfaisante au regard des inconvénients cités, en particulier de la taille des défauts, et des articles à épaisseur non constante.

Un exemple installation mettant en oeuvre un éclairage utilisant une mire est décrit dans le document EP 1 931 973. Ce type d'installation compare des images d'un objet éclairé via une mire, et une image de la mire seule, pour en déduire la présence d'éventuels défauts. Cependant, cette comparaison ne permet pas de détecter les défauts qui se trouvent dans les zones sombres de la mire. Dans le document de brevet US 6212962 on a proposé une installation de détection de défauts dans des produits verriers.

### EXPOSE DE L'INVENTION

L'invention concerne donc un procédé selon la revendication 1 de détection des défauts de moulage ou soufflage dans les articles verriers, et plus particulièrement les défauts dits transparents, c'est-à-dire les défauts qui apparaissent faiblement contrastés par rétroéclairage.

Conformément à l'invention, ce procédé consiste tout d'abord à rétroéclairer l'article en question au moyen d'une ou plusieurs sources lumineuses, et ce selon au moins une paire de motifs d'éclairage similaires, et décalés spatialement. Puis, on capte selon le même angle de vue au moins une paire d'images de cet article rétroéclairé, chaque image de la paire correspondant à un des motifs de la paire de motifs mentionnée. Ensuite, on combine les deux images de chacune des paires, pour former au moins une image composite. Enfin, on peut ainsi détecter des zones de plus fort contraste au sein de ces images composites.

Autrement dit, l'invention consiste à rétroéclairer un objet transparent selon deux motifs d'éclairage qui sont différents, mais qui se déduisent géométriquement l'un de l'autre, de telle sorte que les deux images ainsi obtenues peuvent être assemblées par un traitement qui permet de mettre en valeur les éventuels défauts. En effet, les deux images individuelles obtenues à partir de l'éclairage de chacun des motifs de la paire caractéristique, possèdent des zones éclairées localisées dans des régions qui se déduisent géométriquement du décalage spatial des zones éclairées des motifs. Les caméras ont des axes optiques confondus, de telles sorte qu'elle captent des images correspondant à la même scène. Ces images ne diffèrent qu'à cause des différences des motifs d'éclairage, et peuvent donc se superposer.

En d'autres termes, les régions lumineuses de chacun des motifs engendrent des régions lumineuses localisées sur chaque image, dans lesquelles la perturbation générée par les défauts éventuels à identifier provoque des sortes de distorsions. Ces distorsions ne sont pas parfaitement superposées selon l'éclairage des deux motifs, de sorte que la combinaison des images caractéristiques peut faire ressortir avec un contraste particulier les zones des défauts dans cette image composite.

En pratique, différentes géométries peuvent être adoptées pour les motifs, et en particulier les motifs qui comportent des ensembles de bandes parallèles, ces bandes étant décalées spatialement d'un demi-pas d'un motif à l'autre.

Avantageusement, le rapport entre la largeur d'une bande et le pas du motif est compris entre 5 et 40 %,

En effet, on a remarqué que lorsque les bandes occupent moins de la largeur d'un demi pas, on minimise, voire on annule les recouvrements entre les zones éclairées par les bandes d'un motif à l'autre, et on peut ainsi plus facilement détecter les perturbations dues aux défauts. Le rapport de la largeur de la bande par rapport au pas du motif peut être régulé et optimisé en fonction du type d'article verrier à analyser, en fonction notamment des dimensions générales de l'article, mais également de la taille des zones spécifiques à analyser.

En pratique, il peut être avantageux d'utiliser une seule source lumineuse, qui génère l'éclairage des deux motifs selon des couleurs distinctes, qu'il convient ensuite de séparer par des filtrages appropriés à chacune de ces couleurs. Ainsi, une même source peut être agencée pour éclairer selon des motifs de bandes de deux couleurs, qui sont décalés spatialement, et séparés par des zones noires correspondant ainsi aux zones communes des deux motifs.

En pratique, il est possible de combiner cette analyse en rétroéclairant l'article selon plusieurs paires de motifs, chaque paire présentant une orientation distincte. Ainsi, dans le cas particulier des bandes parallèles, une paire de motifs peut présenter une orientation perpendiculaire à la deuxième paire, de manière à améliorer les performances de détection. Bien entendu, ce principe peut être décliné en multipliant le nombre de paires de motifs selon le degré de précision que l'on souhaite obtenir.

En pratique, différentes opérations peuvent être réalisées pour assurer la combinaison des deux images d'une même paire. Une des combinaisons possibles consiste à assurer la détermination du minimum d'intensité de chaque pixel des deux images pour obtenir ainsi une image composite. Différentes opérations de pré (ou post) traitement peuvent être réalisées pour améliorer l'efficacité de la détection, ou faciliter le traitement des images composites en vue de la détection des défauts.

Il est ainsi possible par exemple d'opérer une correction de niveau de couleur sur chacune des deux images d'une paire d'éclairage avant de les combiner. Un seuillage adaptatif peut dans un certains nombre de cas convenir comme post traitement.

L'invention peut ainsi être mise en oeuvre sur une installation selon la revendication 7 qui comporte :
- au moins une source lumineuse apte à éclairer selon une paire de motifs similaires décalés spatialement ;
- au moins une caméra disposée du côté opposé à l'article par rapport aux sources lumineuses, cette ou ces caméras étant aptes à générer plusieurs images de l'article rétroéclairé, chacune selon un des motifs de paire de motifs d'éclairage. ;
- des moyens pour combiner les images captées par la ou les caméras pour former une image composite et afficher ou traiter cette image composite afin d'y détecter les zones de plus fort contraste correspondant généralement aux zones de défauts recherchées.

En pratique, cette installation peut comporter avantageusement une source lumineuse unique, qui est apte à éclairer selon la paire de motifs. Ainsi, dans le cas d'un éclairage par bandes, selon deux couleurs distinctes, la source génère la double série de bandes décalées d'un demi-pas.

En pratique, l'installation peut comprendre plusieurs caméras aptes à générer chacune une image correspondant à l'éclairage par l'un des motifs, ces caméras étant agencées pour capter la même scène. Il est également possible que l'installation comporte une caméra unique incluant plusieurs capteurs, voire même un seul capteur sensible sur un spectre couvrant les longueurs d'ondes des différents motifs d'éclairage, comme par exemple un capteur de type « TriCCD ».

Dans le cas où l'on emploie plusieurs caméras, il est avantageux que l'installation comporte un dispositif diviseur d'images, agencé pour acheminer l'image de l'article rétroéclairé à chacune des caméras, de telle sorte que les caméras reçoivent des images simultanées et sous strictement la même incidence.

Avantageusement, chacune de ces images est filtrée selon la couleur des bandes du motif d'éclairage, afin d'obtenir des images en niveau de gris, qui sont facilement combinables.

### DESCRIPTION SOMMAIRE DES FIGURES

La manière de réaliser l'invention ainsi que les avantages qui en découlent ressortiront bien du mode de réalisation qui suit, donné à titre indicatif mais non limitatif, à l'appui des figures annexées dans lesquelles :
- la figure 1 est une représentation schématique en vue de dessus d'une installation conforme à l'invention ;
- les figures 2a et 2b sont des vues de face de la source lumineuse illuminée selon respectivement les deux motifs ;
- la figure 2c est une vue de la même source lumineuse montrant l'illumination simultanée selon les deux motifs ;
- les figures 3a et 3b sont des images d'un premier article illuminé selon respectivement deux motifs ;
- la figure 4 est une image montrant la combinaison des deux images des figures 3a et 3b ;
- les figures 5a et 5b sont des images analogues aux figures 3a et 3b pour un second article verrier ;
- la figure 6 est une image composite combinant les deux images des figures 5a et 5b.

### MANIERE DE REALISER L'INVENTION

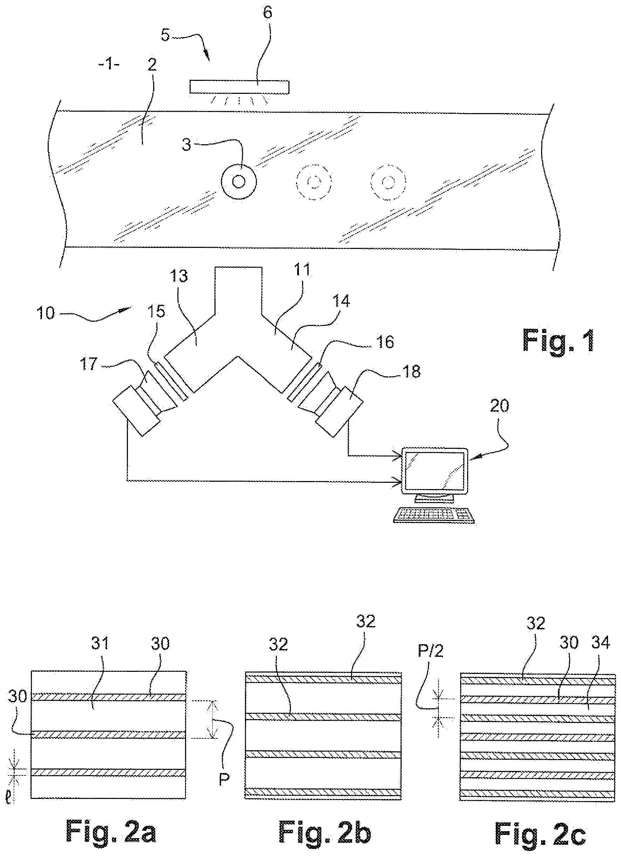

Comme déjà évoqué, l'invention concerne un procédé et une installation de détection de défauts **1** dits transparents dans les articles verriers. Un exemple d'une telle installation est représenté à la figure 1 dans laquelle on observe un convoyeur **2** sur lequel sont disposés les différents articles **3** à analyser, et qui défilent donc devant le poste **5** de détection de défauts. Dans la forme illustrée, l'installation comporte un poste d'analyse **5,** qui se compose essentiellement d'une source lumineuse **6** située d'un côté du convoyeur **2,** et d'un ensemble **10** de prise d'image situé du côté opposé. Bien entendu, l'invention couvre également les variantes dans lesquelles ce poste d'analyse comporte plusieurs couples de sources lumineuses/ensemble de prise d'image, permettant d'analyser un même article selon plusieurs angles d'incidence. L'invention couvre également les variantes pour lesquelles l'axe de vision des caméras forme un angle non nul avec la normale à la source lumineuse. Les différents angles donnant des résultats efficaces sur les articles testés sont compris entre 0° et 60°. Cet angle peut être dans un plan horizontal, c'est-à-dire parallèle au convoyeur sur lequel défilent les articles, pour inspecter une partie des faces avant et arrière de l'article, selon son sens de déplacement. Il est également possible que cet angle se trouve dans un plan vertical, pour permettre l'inspection de parties hautes ou basses, comme par exemple la zone de l'épaule d'une bouteille.

Dans la forme illustrée à la figure 1, la source lumineuse **6** est représentée de façon schématique, et peut être réalisée de différentes manières, comme par exemple par une matrice à cristaux liquides (LCD) ou de manière générale, par une matrice de différentes diodes électroluminescentes. Il peut également s'agir d'une source composée d'un projecteur, combiné à des mires superposées permettant de définir la paire de motifs caractéristiques. Une solution alternative peut être réalisée avec une source à base de diodes électroluminescentes.

De l'autre côté du convoyeur **2,** l'ensemble de prise d'image **10** se compose principalement d'un dispositif **11** permettant de générer deux images identiques à partir d'une prise de vue unique. Ce dispositif « diviseur d'image » peut être par exemple du type « CCD Multiplier » commercialisé sous la référence « S5 SET 1035 » par la société SILL OPTICS GmbH.

Dans le cas illustré où les motifs d'illumination sont réalisés avec une discrimination chromatique, les deux sorties **13,14** du diviseur d'image sont interfacées avec un filtre coloré **15,16** permettant de ne conserver que les informations résultant d'un des motifs colorés. Dans une variante non représentée, il est également possible d'utiliser une caméra unique possédant un capteur du type TriCCD, sensible sur un spectre couvrant les couleurs des deux motifs.

Ce diviseur d'image **11** alimente donc deux caméras **17,18** correspondant à des modèles classiquement employés dans le domaine de la détection de défauts d'articles verriers, comme par exemple des caméras monochromatiques à base de capteurs CCD commercialisée par la société JAI A.S sous la référence CVA1. Ces deux caméras **17,18** sont interfacées avec une unité de contrôle **20,** apte à réaliser divers traitements d'image, et en particulier la combinaison des deux images en provenance de chacune des caméras. Grâce à la présence du diviseur d'image, les deux caméras captent la même scène, et possèdent le même axe optique dans la zone utile où se trouve l'article à inspecter.

Comme illustré aux figures 2a, 2b, les motifs caractéristiques peuvent se présenter sous forme de bandes parallèles colorées **30,** séparées par des bandes noires **31** ou plus précisément des bandes ne provoquant aucun éclairage. Ces bandes lumineuses **30** sont réparties de manière régulière selon un pas **(p),** correspondant à la distance séparant le milieu de deux bandes adjacentes **30.** Le motif illustré à la figure 2b est également constitué d'une succession de bandes parallèles **32,** réparties selon le même pas **(p).** Dans le cas d'une discrimination de type chromatique, les bandes lumineuses **32** du second motif possèdent une longueur d'onde différente de celle de la couleur des bandes **30** du premier motif illustré à la figure 2a.

De préférence, on choisira des coloris qui présentent des longueurs d'ondes éloignées, tel que le bleu et le rouge, étant entendu que la discrimination sera d'autant plus efficace que les spectres lumineux des sources présenteront des raies les plus serrées possible.

Conformément à l'invention, les bandes **32** du second motif sont décalées spatialement de celles **30** du premier motif, avantageusement d'un demi-pas. Ainsi, comme illustré à la figure 2c, la superposition des deux motifs correspond au niveau de la source lumineuse à une double succession de bandes colorées alternées. Dans la forme illustrée à la figure 2c, on remarque que les bandes lumineuses **30,32** ne possèdent aucun recouvrement, et sont donc séparées par des bandes noires **34.** En d'autres termes, le rapport de la largeur (ℓ) d'une bande lumineuse divisée par le pas **p** est inférieur à 50 %, et peut être réglé en fonction du type d'article à analyser. Plus précisément, plus ces bandes sont déformées à travers l'article du fait d'une géométrie tridimensionnelle complexe, plus il est intéressant de rabaisser ce rapport, jusqu'à une limite de l'ordre de 5 %. A l'inverse, plus ce rapport est élevé, c'est-à-dire se rapprochant de 40 % environ, plus les défauts à détecter sont faiblement contrastés, et donc plus difficilement détectables. Un compromis est à trouver à l'intérieur de cette plage 5 et 45 %. Ainsi, des essais ont montré que la détection des plis et des bulles est plus performante lorsque le rapport cyclique se trouve aux environs respectivement de 10% et 25%.

Bien entendu, l'invention couvre également les variantes dans lesquelles les motifs ne sont pas constitués de bandes rectilignes parallèles, mais combinent d'autres géométries qui peuvent être diverses dès lors qu'il n'y a pas de chevauchement entre les deux motifs lorsqu'ils sont superposés. De même, les figures 2a à 2c ont été représentées avec des bandes lumineuses parallèles de même largeur d'un motif à l'autre, sans que cela soit absolument obligatoire.

Le même principe illustré pour deux motifs peut bien entendu se décliner avec un nombre de motifs supérieur, grâce à des séries supplémentaires de bandes lumineuses parallèles, adoptant des couleurs distinctes.

De même, il est possible de combiner d'autres motifs complémentaires, par exemple des bandes parallèles lumineuses qui ne sont pas parallèles d'un motif à l'autre. On peut ainsi envisager de superposer deux paires de motifs produits à partir de la même source, une première paire adoptant une première inclinaison et la seconde paire adoptant une inclinaison perpendiculaire. Quatre filtrages différents sont alors employés au niveau du diviseur d'image qui doit alors générer quatre images distinctes, adaptées chacune à un filtre coloré spécifique. L'acquisition des images doit être simultanée pour les deux images d'une paire de motifs, mais les deux paires peuvent être acquises simultanément ou successivement dans le temps.

A l'intérieur de l'unité de commande électronique **20,** on réalise la combinaison des deux images filtrées obtenues en sortie des caméras **17** disposées sur le diviseur d'image **11.** Différents types de combinaisons peuvent être envisagés, comme en particulier pour chaque pixel, le choix du minimum d'intensité des deux images élémentaires.

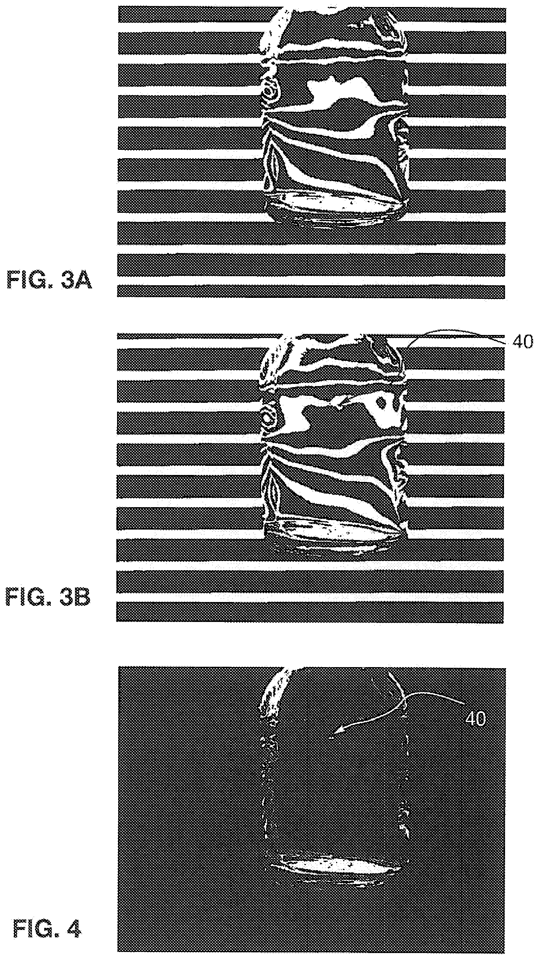

Différents exemples sont illustrés aux figures 3a, 3b et 4. La figure 3a montre une image d'un article éclairé selon un premier motif, dans lequel le défaut transparent est quasiment indétectable. La figure 3b est également une image prise selon le deuxième motif d'illumination dans lequel le défaut **40** est difficilement identifiable. La combinaison des deux images, après un pré-traitement tel qu'un seuillage adaptatif combiné avec une reconnaissance de formes allongées et horizontales, donne l'image illustrée à la figure 4, sur laquelle un point lumineux **40** se détache au centre de l'article, au milieu de la zone totalement sombre que constitue le centre de l'article. Ce point lumineux correspond à la détection d'un bouillon de surface.

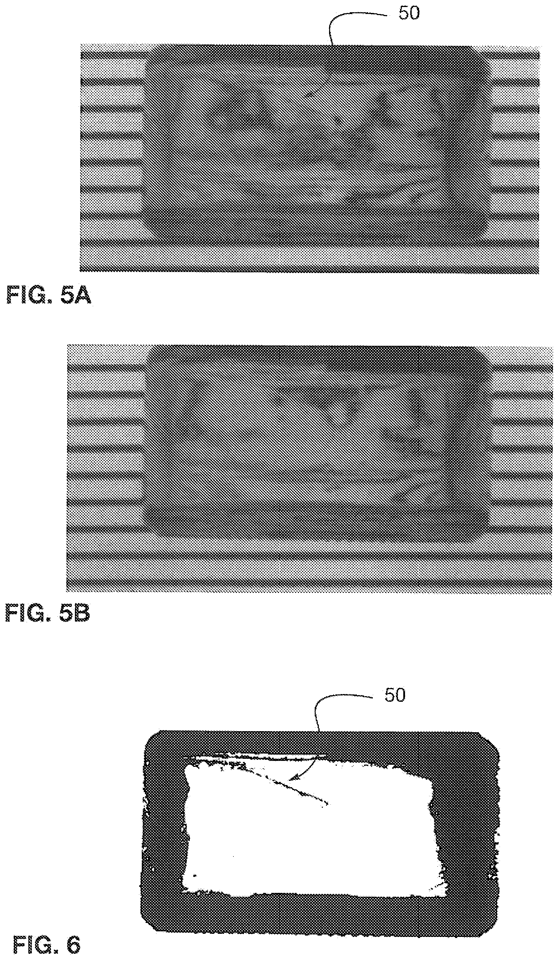

De même, les figures 5a et 5b sont deux images d'un même article selon les deux motifs d'illumination. Un trait sombre **50** peut être détecté à l'intérieur de l'article et visible sur la figure 5a, mais est directement connecté avec d'autres zones lumineuses, de sorte qu'il est difficilement identifiable comme un défaut. On notera que ce trait sombre est invisible dans la figure 5b.

La combinaison des deux images des figures 5a et 5b donne l'image composite de la figure 6. Dans ce cas, dans la mesure où les motifs d'éclairage ont une dominante claire, et plus précisément blanche, la combinaison des deux images se fait en conservant pour chaque pixel la valeur maximale. Dans ce cas, le trait sombre **50** incliné situé à peu près au centre de l'article, et en partie haute de la zone centrale, est très clairement apparent, et permet donc de détecter un défaut de type pli.

Il ressort de ce qui précède que l'installation et le procédé conformes à l'invention permettent avantageusement de détecter les défauts transparents avec un taux de réussite nettement plus élevé que les solutions de l'art antérieur, et ce en employant des matériels de conception standard , et avec des cadences d'analyse compatibles avec les cadences maximales de production actuel, soit de l'ordre de 600 articles à la minute.

## Revendications

1. Procédé de détection de défauts de moulage ou soufflage dans des articles verriers (3) qui consiste à :
- rétroéclairer ledit article (3) au moyen d'une ou plusieurs sources lumineuses (6) selon au moins une paire de motifs d'éclairage similaires décalés spatialement ;
- capter selon le même angle de vue au moins une paire d'images dudit article rétroéclairé selon chacun des motifs de ladite au moins une paire de motifs ;
- combiner les images de chacune desdites paires pour former au moins une image composite ;
- détecter les zones de plus fort contraste au sein desdites images composites.

2. Procédé de détection selon la revendication 1, ***caractérisé* en ce que** les motifs sont des ensembles de bandes parallèles (30,32) décalées spatialement d'un demi-pas (p) d'un motif à l'autre.

3. Procédé de détection selon la revendication 2, ***caractérisé* en ce que** les motifs sont des ensembles de bandes (30,32) de deux couleurs différentes.

4. Procédé de détection selon la revendication 2, ***caractérisé* en ce que** le rapport entre la largeur d'une bande et le pas du motif est compris entre 5 et 40 %.

5. Procédé de détection selon la revendication 2, ***caractérisé* en ce que** l'on rétroéclairé l'article selon plusieurs paires de motifs, chaque paire présentant une orientation distincte.

6. Procédé de détection selon la revendication 2, ***caractérisé* en ce que** la combinaison des images d'une paire consiste en un traitement analogue à la détermination du minimum d'intensité de chaque pixel des deux images.

7. Installation (1) de détection de défauts dits à faible contraste dans des produits verriers (3), comportant:
- au moins une source lumineuse (6) conçue pour éclairer ledit produit (3) selon une paire de motifs similaires décalés spatialement ;
- au moins une caméra disposée du côté opposé à l'article (3) par rapport à ladite au moins une source lumineuse (6), ladite au moins une caméra (17,18) étant conçue pour générer une paire d'images, sous le même angle de vue, dudit article (3) rétroéclairé par ladite au moins une source (6) selon chaque motif de la paire de motifs ;
- des moyens (20) pour combiner lesdites images de la paire en une image composite et pour afficher ou traiter ladite image composite afin de détecter les zones de plus fort contraste.

8. Installation selon la revendication 7, ***caractérisée* en ce qu'**elle comporte une source lumineuse (6) unique apte à éclairer selon la paire de motifs.

9. Installation selon la revendication 7, **caractérisée en ce qu'**elle comporte plusieurs caméras aptes à capter la même scène.

10. Installation selon la revendication 9, ***caractérisée* en ce qu'**elle comporte un dispositif diviseur (11) d'images agencé pour acheminer l'image de l'article rétroéclairé à chacune des caméras.

11. Installation selon la revendication 7, ***caractérisée* en ce que** chacune des images est filtrée (15,16) selon la couleur des bandes dudit motif afin d'obtenir des images en niveau de gris.

## Patentansprüche

1. Verfahren zur Erkennung von Form- oder Blasmängeln in Glaswaren, (3) das darin besteht:
- diesen Artikel (3) von hinten zu beleuchten mittels einer oder mehrerer Lichtquellen (6), gemäß mindestens einem Paar räumlich versetzter, ähnlicher Beleuchtungsmuster;
- mit demselben Blickwinkel, mindestens ein Paar Bilder des hinterleuchteten Artikels zu erfassen, gemäß jedem der Muster des mindestens einen Paars von Mustern;
- die Bilder jedes der Paare zu kombinieren, um mindestens ein zusammengesetztes Bild zu bilden;
- die Zonen mit dem stärksten Kontrast innerhalb der zusammengesetzten Bilder. zu erfassen.

2. Verfahren zur Erkennung gemäß Anspruch 1, **dadurch gekennzeichnet, dass** die Muster Einheiten aus parallelen Streifen (30, 32) bilden, räumlich um einen Halbschritt (p) von einem Muster zum anderen versetzt.

3. Verfahren zur Erkennung gemäß Anspruch 2, **dadurch gekennzeichnet, dass** die Muster Einheiten aus Streifen (30, 32) mit zwei verschiedenen Farben sind.

4. Verfahren zur Erkennung gemäß Anspruch 2, **dadurch gekennzeichnet, dass** die Beziehung zwischen der Breite eines Streifens und dem Schrittabstand des Musters zwischen 5 und 40% liegt.

5. Verfahren zur Erkennung gemäß Anspruch 2, **dadurch gekennzeichnet, dass** der Artikel entsprechend mehreren Musterpaaren hinterleuchtet wird, wobei jedes Paar eine unterschiedliche Ausrichtung hat.

6. Verfahren zur Erkennung gemäß Anspruch 2, **dadurch gekennzeichnet, dass** die Kombination der Bilder eines Paares in der analogen Bearbeitung zur Bestimmung der minimalen Intensität jedes Pixels der beiden Bilder besteht.

7. Anlage (1) zur Erkennung von sogenannten kontrastarmen Mängeln in Glaswaren (3), umfassend:
- mindestens eine Leuchtquelle (6), konzipiert zur Beleuchtung dieses Artikels (3) entsprechend einem Paar ähnlicher, räumlich versetzter Muster;
- mindestens eine Kamera angeordnet auf der entgegengesetzten Seite des Artikels (3), bezogen auf diese mindestens eine Leuchtquelle (6), diese mindestens eine Kamera (17,18) ist dazu konzipiert, ein Bildpaar, unter demselben Blickwinkel, dieses durch diese mindestens eine Leuchtquelle (6), entsprechend jedem Muster des Motivpaares hinterleuchteten Artikels (3) zu erzeugen
- Mittel (20) zur Kombination dieser Bilder des Paares zu einem zusammengesetzten Bild und zur Anzeige oder Bearbeitung dieses zusammengesetzten Bildes, um die Zonen mit stärkerem Kontrast zu erkennen.

8. Anlage gemäß Anspruch 7, **dadurch gekennzeichnet, dass** sie eine einzige Leuchtquelle (6) enthält, die in der Lage ist entsprechend dem Motivpaar zu beleuchten.

9. Anlage gemäß Anspruch 7, **dadurch gekennzeichnet, dass** sie mehrere Kameras enthält, die dieselbe Szene erfassen können.

10. Anlage gemäß Anspruch 9, **dadurch gekennzeichnet, dass** sie eine Bildteilervorrichtung (11) enthält, vorgesehen, um das Bild des hinterleuchteten Artikels zu jeder der Kameras zu leiten.

11. Anlage gemäß Anspruch 7, **dadurch gekennzeichnet, dass** jedes der Bilder gefiltert wird (15, 16) nach der Farbe der Streifen dieses Musters, um Bilder in Graustufen zu erhalten.

## Claims

1. A method for detecting pressing or blowing defects in glassware articles (3), comprising :
- backlighting said article (3) by means of one or several light sources (6) according to at least one pair of similar patterns shifted in space;
- capturing according to the same angle of sight at least one pair of images of said backlit article according to each of the patterns of said at least one pair of patterns;
- combining the images of each of said pairs to form at least one composite image;
- detecting the areas of stronger contrast within said composite images.

2. The detection method of claim 1, ***characterized in that*** the patterns are sets of parallel strips (30, 32) shifted in space by one half-step (p) from one pattern to the other.

3. The detection method of claim 2, ***characterized in that*** the patterns are sets of strips (30, 32) of two different colors.

4. The detection method of claim 2, ***characterized in that*** the ratio of the width of a strip to the step of the pattern ranges between 5 and 40 %.

5. The detection method of claim 2, ***characterized in that*** the article is backlit according to several pairs of patterns, each pair having a different direction.

6. The detection method of claim 2, ***characterized in that*** the combination of the images of a pair comprises a processing similar to the determination of the minimum intensity of each pixel of the two images.

7. An installation (1) for detecting so-called low-contrast defects in glassware products, comprising :
- at least one light source (6) capable of providing light to said products according to a pair of similar patterns shifted in space;
- at least one camera arranged on the side opposite to the article (3) with respect to said at least one light source (6), said at least one camera (17, 18) being suitable for generating a pair of images of said article (3) backlit by said at least one source (6) according to each pattern of the pair of patterns;
- means (20) for combining said images of the pair in a composite image and for displaying or processing said composite image to detect areas of stronger contrast.

8. The installation of claim 7, ***characterized in that*** it comprises a single light source (6) capable of providing light according to the pair of patterns.

9. The installation of claim 7, ***characterized in that*** it comprises several cameras capable of capturing the same scene.

10. The installation of claim 9, ***characterized in that*** it comprises an image-dividing device (11) arranged to convey the image of the backlit article to each of the cameras.

11. The installation of claim 7, ***characterized in that*** each of the images is filtered (15, 16) according to the color of the strips of said pattern, to obtain grey level images.
